# EUROPÄISCHE PATENTSCHRIFT

(11) **EP 1 682 801 B1**
(45) Veröffentlichungstag und Bekanntmachung des Hinweises auf die Patenterteilung: **16.03.2011**
(21) Anmeldenummer: 04790718.3
(22) Anmeldetag: 21.10.2004
(51) Int. Cl.: F16K 1/30

(54) **ELEKTROMAGNETISCHES VENTIL**
ELECTROMAGNETIC VALVE
SOUPAPE ELECTROMAGNETIQUE

(30) Priorität: 21.10.2003 DE 10349378; 31.12.2003 DE 10361781
(43) Veröffentlichungstag der Anmeldung: 26.07.2006
(60) Teilanmeldung: 08157937.7
(73) Patentinhaber: Perthel, Klaus, 51399 Burscheid (DE); GM Global Technology Operations, Inc., Detroit, MI 48265-3000 (US)
(72) Erfinder: PERTHEL, Klaus, 51399 Burscheid (DE); JAUSS, Andreas, 56479 Westernohe (DE)
(74) Vertreter: Patentanwälte Freischem
(86) Internationale Anmeldenummer: PCT/EP2004/011913
(87) Internationale Veröffentlichungsnummer: WO 2005/040654

(56) Entgegenhaltungen:
- EP-A- 1 327 808
- FR-A- 2 816 032
- US-A- 5 452 738
- US-A- 5 458 151
- US-A1- 2003 075 700

## Beschreibung

### Technisches Umfeld

Die Erfindung betrifft ein elektromagnetisches Ventil für eine Gasflasche, insbesondere eine Gasflasche für ein gasbetriebenes Kraftfahrzeug, gemäß dem Oberbegriff des Patentanspruchs 1.

Derartige elektromagnetische Ventile sind beispielsweise bekannt aus den Druckschriften US 5,197,710, US 5,458,151 und US 5,452,738.

Die bekannten elektromagnetisch betätigten Ventile oder soleonid-betätigten Ventile dienen der Steuerung der Strömung komprimierter Gase in die Gasflasche hinein oder aus der Gasflasche hinaus. Gasflaschen für gasbetriebene Fahrzeuge enthalten das Verbrennungsgas bei einem Überdruck, beispielsweise zwischen 2 und 260 bar. Die genannten elektromagnetischen Ventile ermöglichen einen bidirektionalen Gasstrom einerseits beim Betanken in die Gasflasche hinein und andererseits im Fahrbetrieb des Motors aus der Gasflasche hinaus zu dem Motor hin. Im Fahrbetrieb strömt das Gas von dem Innenraum der Gasflasche mit hohem Druck durch einen Anschlußkanal in die Zuführleitung zum Druckminderer, in dem der Druck auf den erforderlichen Einblasdruck des Motors reduziert wird, z.B. 2 bis 8 bar. Im Tankbetrieb strömt das Gas in entgegengesetzte Richtung von einer Betankungsanlage über den gleichen Anschlußkanal in die Gasflasche hinein. Der Betankungskanal der Betankungsanlage weist während des Betankungsvorgangs einen hohen Innendruck z.B. 200 bis 260 bar auf. Die leere Gasflasche hat einen niedrigeren Innendruck, bis sie vollständig mit Gas befüllt ist und den Druck der Betankungsanlage erreicht.

Neben ihrer Funktion der zuverlässigen Regelung der Gasströmung in den beiden unterschiedlichen Betriebssituationen müssen derartige elektromagnetische Ventile hohe Sicherheitsanforderungen erfüllen. Aus diesem Grund wurde in den genannten US-Patenten vorgeschlagen, den Hohlraum zur Aufnahme des Absperrkolbens und der elektromagnetischen Steuerelemente des Ventils innerhalb des Gewindeabschnittes und/oder des in die Gasflasche hineinragenden Abschnittes des Ventilkörpers anzuordnen. Der Ventilkörper besteht aus einem relativ weichen Material, beispielsweise Messing, wogegen die Gasflasche aus sehr hartem Material, üblicherweise Stahl oder Kompositwerkstoff, besteht. Durch das Verlagern des Absperrkolbens und der Steuerelemente in Abschnitte des Ventilkörpers, die sich innerhalb der harten Wandung der Gasflasche befinden, wird die Sicherheit des Ventils im Crash-Fall, d.h. bei starken Schlägen auf das Ventil aufgrund eines Unfalls, stark erhöht im Vergleich zu Ventilen mit außerhalb der Flasche liegenden funktionalen Elementen. Zur Demontage der Ventile für Wartungs- oder Reinigungszwecke muß zunächst der Ventilkörper aus der Gasflasche herausgeschraubt werden, damit die funktionalen Elemente des Ventils, nämlich der Absperrkolben und die Steuerelemente, von der in der Gasflasche liegenden Rückseite des Ventilkörpers aus zugänglich sind.

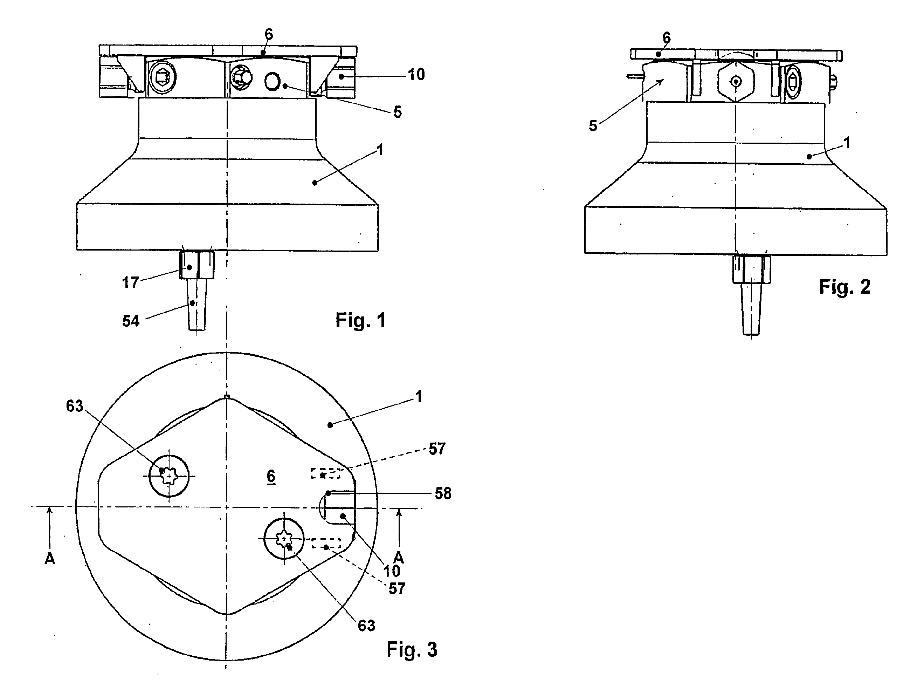

Aus der Druckschrift US 2003/0066836 A1 ist ein Hochdruck-Gastank mit einem druckmindernden Ventil mit den Merkmalen des Oberbegriffs des Anspruchs 1 bekannt. Bei diesem Ventil sind alle Ventilteile in einem Einsatz (valve case 13 genannt; vgl. z.B. Fig. 2) in einen Ventilkörper eingeschraubt, der sich innerhalb des Halses der Gasflasche befindet. Der Einsatz weist einen gasführenden Kanal auf, der von dem Innern der Gasflasche bis nach Außen führt, d.h. bis zum Gasleitungsanschlußteil 13c.

### Offenbarung der Erfindung

Eine Aufgabe der Erfindung ist es, die Demontage und Montage eines gattungsgemäßen Ventils zu erleichtern.

Diese Aufgabe wird erfindungsgemäß durch die Gesamtheit der Merkmale des Patentanspruchs 1 gelöst.

Durch das Öffnen des Hohlraums für den Absperrkolben und die elektromagnetischen Steuerelemente zur Vorderseite, d.h. zur außen liegenden Seite des Ventilkörpers hin, wird deren Demontage und Montage bei in der Gasflasche eingeschraubtem Ventilkörper ermöglicht. Dies erleichtert wesentlich die Wartungs- und Reinigungsarbeiten an derartigen Ventilen. Es ist nicht erforderlich, den Ventilkörper aus der Gasflasche zu entfernen, um die funktionalen Elemente des Ventils auszubauen. Hierdurch können die Zeiten, die für die Wartung und Reinigung erforderlich sind, stark reduziert werden. Da bei Wartungsarbeiten der Ventilkörper nicht von der Gasflasche entfernt wird, braucht anschließend die Verbindung zwischen Ventil und Gasflasche nicht auf Dichtheit geprüft zu werden.

Gemäß der Erfindung ermöglicht es dabei ein manuell betätigbares Absperrventil, den Gasfluß zu dem Hohlraum zu unterbrechen.

Im Bereich der Mündung des Hohlraums kann in der Praxis ein Außengewinde angeordnet sein, in das ein Schraubdeckel einschraubbar ist. Der Schraubdeckel dichtet den Hohlraum gegen die Umgebung ab und vermeidet das Eindringen von Schmutz und Feuchtigkeit in den Hohlraum und die darin aufgenommenen funktionalen Elemente des elektromagnetischen Ventils.

In der Praxis kann der Hohlraum am unteren Ende ein Innengewinde aufweisen, in welches ein Außengewinde einer Hülse des Ventils einschraubbar ist. Innerhalb der Hülse ist der Absperrkolben mit weiteren funktionalen Elementen des Ventils sowie die von außen elektromagnetisch verstellbaren Anker und weitere Steuerelemente des elektromagnetischen Ventils angeordnet. Der obere Abschnitt der Hülse ist zylindermantelförmig ausgebildet. Nach der Montage der Hülse wird eine Spule auf einen zylindermantelförmigen Abschnitt der Hülse innerhalb des Hohlraums aufgeschoben. Die Spule betätigt die elektromagnetischen Steuerelemente, d.h. die Anker. Der Schraubdeckel schützt die eingeschraubte Hülse und die Spule vor Feuchtigkeit und Verschmutzen.

Elektromagnetische Ventile, z.B. nach ECE R110, weisen in der Praxis weitere Elemente auf. Derartige Elemente sind beispielsweise ein manuelles Absperrventil, mit dem der Gasfluß durch das elektromagnetische Ventil unabhängig von dessen Steuerungszustand unterbrochen werden kann. Ferner sind Anschlußstutzen vorgesehen, welche ein Rückschlagventil aufweisen, wenn diese zum Anschluß an die Betankungsanlage vorgesehen sind. Ein derartiges Rückschlagventil verhindert den Rückfluß des Gases aus den Gasflaschen durch den Anschluß für die Betankungsanlage im Crash-Fall und nach dem Abziehen der Tankarmatur. Ein weiterer Anschlußstutzen ohne Rückschlagventil kann zur Verbindung der Gasflasche mit dem Motor oder mit weiteren Gasflaschen an dem Fahrzeug vorgesehen sein.

Besondere Bedeutung haben Sicherungselemente an dem Ventil. Zum einen sollte eine Überdrucksicherung mit einer Berstscheibe vorgesehen sein. Eine derartige Überdrucksicherung ermöglicht das Ausströmen des Gases in einem Fall, wenn der Innendruck der Gasflasche einen kritischen Wert erreicht hat. Beispielsweise kann sich das Gas in einer Gasflasche im Falle eines Feuers so weit erhitzen, daß die Flasche zu explodieren droht. In einem solchen Fall ist es vorzuziehen, das Gas kontrolliert abzulassen, um eine Explosion zu vermeiden. Weiter können thermische Sicherungselemente vorgesehen sein. Derartige Sicherungselemente umfassen in der Regel fluidgefüllte Glaskörper. Die Glaskörper zerplatzen, wenn die Temperatur der Flüssigkeit in dem Glaskörper einen kritischen Wert übersteigt. Ein derartiges Sicherungselement vermeidet ein Explodieren der Gasflasche im Falle der Erweichung ihrer Außenhaut aufgrund großer Hitze.

Bei einer praktischen Ausführungsform des erfindungsgemäßen Ventils weist der Ventilkörper mindestens einen Aufnahmeraum für ein weiteres Element auf, welches eines der oben beschriebenen Elemente sein kann. Der Aufnahmeraum weist eine Öffnung außerhalb der Gasflasche auf, durch welche das weitere Element einfügbar ist. Hierdurch wird ermöglicht, daß das genannte weitere Element wie das Ventil selbst bei in die Gasflasche eingeschraubtem Ventilkörper eingebaut und ausgebaut und somit gewartet und gereinigt werden kann.

Um zu ermöglichen, daß durch den Hohlraum in dem Ventilkörper, in dem der Absperrkolben und die Steuerungselemente angeordnet sind, Gas aus dem Flascheninneren ausströmt oder dorthin einströmt, weist der Ventilkörper vorzugsweise mindestens einen Strömungskanal auf, der den Hohlraum mit mindestens einer Anschlußöffnung außerhalb der Gasflasche verbindet. An der Anschlußöffnung werden vorzugsweise Kupplungsstücke angeordnet, die mit einer Abströmleitung und/oder Zuströmleitung verbindbar sind. Insbesondere für den Anschluß einer Zuströmleitung von einer Tankanlage kann das Kupplungsstück mit einem Rückschlagventil versehen sein. Da die Anschlußöffnungen ebenfalls außerhalb der Gasflasche liegen, sind derartige Kupplungsstücke auch bei fest in der Gasflasche montiertem Ventilkörper lösbar und montierbar.

Ferner kann der Ventilkörper in der Praxis mindestens einen Strömungskanal umfassen, der den Hohlraum mit einer Mündung in den Innenraum der Gasflasche verbindet. Zusätzlich kann der Ventilkörper mindestens einen Strömungskanal umfassen, der den mindestens einen Aufnahmeraum mit einer Mündung in den Innenraum verbindet. Dies ist beispielsweise erforderlich, wenn in dem Aufnahmeraum ein Sicherungselement angeordnet ist, das die kontrollierte Abströmung des Gases aus dem Innenraum bewirken soll.

An der Mündung in den Innenraum der Gasflasche kann in der Praxis ein Durchflußbegrenzer angeordnet werden. Der Durchflußbegrenzer hat einen gegen eine Federkraft verschiebbaren Verschlußkörper. Bei einer untypisch hohen Druckdifferenz zwischen der Vorderseite und der Rückseite dieses Verschlußkörpers wird die Ausströmgeschwindigkeit aus der Gasflasche so weit reduziert, daß beispielsweise gefährliche Flammenbildung außerhalb der Gasflasche vermieden oder vermindert wird. In einer Ausführungsform können alle zum Innenraum der Gasflasche führenden Strömungskanäle mit der gleichen Mündung verbunden sein. Der Durchflußbegrenzer wirkt in diesem Fall gleichermaßen zur Begrenzung des Durchflusses im Falle der Beschädigung einer Zuführleitung des Gases zum Motor. Falls beim Auslösen der Sicherungselemente ein ungehindertes Abfließen der Flaschenfüllung gewünscht ist, können die Sicherungselemente auch über separate Kanäle ohne Durchflußbegrenzer mit dem Innenraum der Gasflasche verbunden sein.

An der Mündung in den Innenraum der Gasflasche kann ebenfalls ein Filter angeordnet sein. Vorzugsweise werden an der Mündung sowohl ein Filter als auch ein Durchflußbegrenzer angeordnet. Zwar wird davon ausgegangen, daß in eine Gasflasche einströmendes Gas und hieraus ausströmendes Gas frei von Verunreinigungen ist. Erfahrungen aus dem Dauerbetrieb zeigen jedoch, daß Verunreinigungspartikel sowie Korrosionspartikel Verunreinigungen zur Folge haben können. Derartige Verunreinigungen können durch den genannten Filter aus dem Gasstrom entfernt werden.

Bei einer praktischen Ausführungsform ist das außerhalb der Gasflasche liegende Kopfende des Ventilkörpers durch eine harte Schutzplatte abgedeckt. Die Schutzplatte kann aus dem gleichen Material bestehen wie die Gasflasche. Dies ist üblicherweise Stahl. Auf diese Weise schützt die Schutzplatte den Ventilkörper in Bereichen, in denen er nicht von dem Mantel oder von dem Gewindeabschnitt der Gasflasche umgeben ist.

In der Praxis kann das Kopfende des Ventilkörpers gerundete Kanten aufweisen. Im Bereich der Rundung der Kanten entsteht ein kleiner Abstand zwischen dem Kopfende des Ventilkörpers und der Schutzplatte. Dadurch wird der Schutzplatte im Falle eines Schlages auf ihren Rand ein Einfedern ermöglicht. Ferner kann die Schutzplatte im Bereich von Anschlüssen des Ventilkörpers Stützrippen aufweisen, die gegen das Kopfende des Ventilkörpers anliegen. Dies erhöht die schützende Wirkung der Schutzplatte für die aus dem Ventilkörper herausragenden Anschlüsse. Auch kann im Bereich mindestens eines Anschlusses eine Aussparung in der Schutzplatten angeordnet sein, um die Zugänglichkeit z.B. mit einem Schraubwerkzeug zu verbessern. Insbesondere im Fall der Stützrippen weisen die Schutzplattenbereiche seitlich der Aussparung eine ausreichende Festigkeit auf, um den Anschluß vor Schlägen zu schützen.

Zwischen der Schutzplatte und dem Kopfende des Ventilkörpers kann eine elastische Schicht angeordnet werden. Die elastische Schicht besteht in der Praxis beispielsweise aus einem thermoplatischen Kunststoff, insbesondere einem gummiartigen Material. Die elastische Schicht schützt zum einen das Kopfende des Ventilkörpers gegen Verschmutzung und Feuchtigkeit und bewirkt zum anderen eine Dämpfung zwischen der Schutzplatte und dem Kopfende. Die Dämpfung verringert die Wirkung von Schlägen gegen den Ventilkörper.

In der Praxis kann das Kopfende des Ventilkörpers als Mehrkant, insbesondere Vierkant oder Sechskant, ausgebildet sein. Dies ermöglicht das Ansetzen eines Schraubwerkzeugs zum Einschrauben des Ventilkörpers in das Innengewinde der Gasflasche.

Wenn die Gasflasche an einem Kraftfahrzeug mit Fahrgastzelle angebracht wird, sollten die Ausströmöffnungen der Sicherungselemente möglichst an der von der Fahrgastzelle abgewandten Seite des Ventilkörpers angeordnet sein. Hierdurch wird vermieden, daß in einem Notfall, bei dem ein Ausströmen über eines der Sicherungselemente ausgelöst wird, das entzündliche Gas unmittelbar zur Fahrgastzelle hin strömt.

### Kurze Beschreibung der Zeichnungen

Ausführungsformen der Erfindung werden nachfolgend unter Bezugnahme auf die beigefügten Zeichnungen beschrieben. Die Zeichnungen zeigen in:
- Fig. 1: eine Seitenansicht eines oberen Flaschenabschnitts mit eingeschraubtem elektromagnetischem Ventil,
- Fig. 2: eine Vorderansicht der Anordnung aus Fig. 1,
- Fig. 3: eine Draufsicht der Anordnung aus Fig. 1,
- Fig. 4: eine entlang der Schnittlinie A-A in Fig. 3 geschnittene Darstellung der Anordnung,
- Fig. 5: eine entlang der Schnittlinie B-B aus Fig.. 4 geschnittene Darstellung,
- Fig. 6: eine entlang der Schnittlinie C-C in Fig. 5 geschnittene Darstellung des elektromagnetischen Ventils,
- Fig. 7: eine entlang der Schnittlinie D-D in Fig. 5 geschnittene Darstellung der thermischen Sicherungsanordnung,
- Fig. 8: eine entlang der Schnittlinie E-E in Fig. 5 geschnittene Darstellung eines manuellen Absperrventils,
- Fig. 9: eine entlang der Schnittlinie F-F in Fig. 5 geschnittene Darstellung eines Überdruck-Sicherungselements mit Berstscheibe,
- Fig. 10: einen Ausschnitt aus dem Ventilkörper mit daran angeordnetem Absperrkolben und elektromagnetischen Steuerelementen in geschnittener Darstellung,
- Fig. 11: eine verkleinerte Darstellung der zusammengesetzten Teile des elektromagnetischen Ventils aus Fig. 10 in Seitenansicht,
- Fig. 12: eine vergrößerte Darstellung der Einzelteile des thermischen Sicherungselements aus Fig. 7,
- Fig. 13: eine schaubildliche Darstellung der Einzelteile des thermischen Sicherungselements aus Fig. 12,
- Fig. 14: eine geschnittene Darstellung eines Durchflußbegrenzers und
- Fig. 15: die Seitenansicht des Durchflußbegrenzers aus Fig. 14,
- Fig. 16: eine Seitenansicht eines Kupplungsstücks mit Rückschlagventil,
- Fig. 17: eine geschnittene Darstellung eines Kupplungsstücks mit Rückschlagventil und
- Fig. 18: die schaubildliche Darstellung des Kupplungsstücks aus den Fig. 16 und 17.

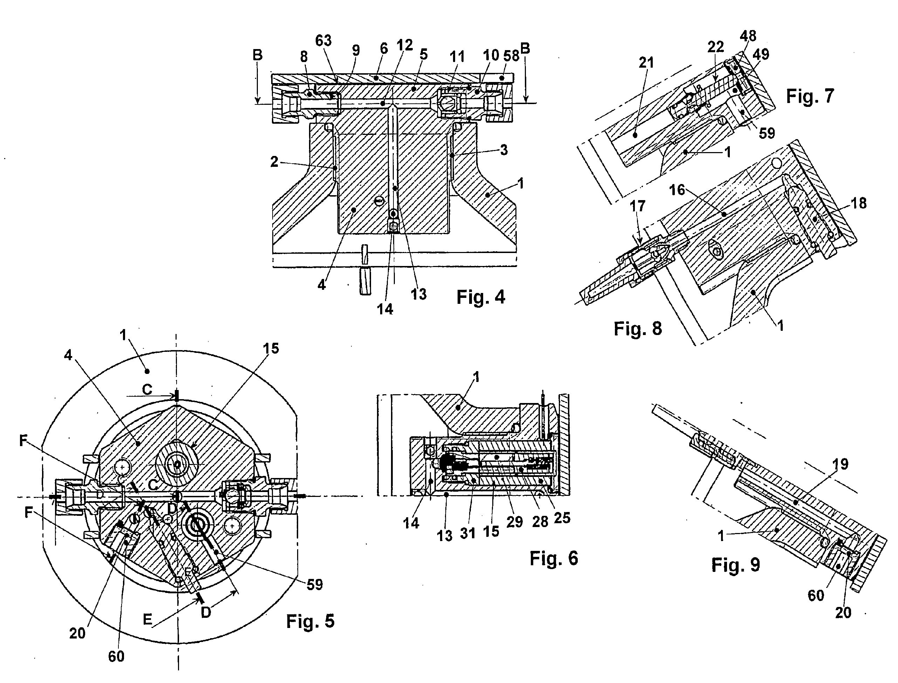

Die Fig. 1 bis 4 zeigen den oberen Abschnitt einer Gasflasche 1, in deren Flaschenhals ein Innengewinde 2 zur Aufnahme eines Außengewindes 3 an einem Ventilkörper 4 (siehe Fig. 4) angeordnet ist. Das außerhalb der Gasflasche 1 liegende Kopfende 5 des Ventilkörpers 4 ist in den Fig. 1, 2 und 4 zu erkennen. Es ist mit einer Schutzplatte 6 aus Stahl abgedeckt. Der Ventilkörper 4 selbst besteht im vorliegenden Fall aus Messing. Die Schutzplatte 6 ist mit Befestigungsschrauben 63 (Fig. 3) an dem Ventilkörper 4 befestigt. Zwischen der Schutzplatte 6 und dem Kopfende 5 des Ventilkörpers 4 befindet sich eine elastische Schicht 7 aus Kunststoff. Die elastische Schicht 7 dämpft Schläge auf die Schutzplatte 6 und dichtet das Kopfende 5 des Ventilkörpers 4 gegen Feuchtigkeit ab.

Wie insbesondere in den Fig. 4 und 5 zu erkennen, befinden sich alle Öffnungen für Aufnahmeräume und die Mündung des Hohlraums 15 für den Absperrkolben und die elektromagnetischen Steuerelemente des Ventils im Bereich des Kopfendes 5 des Ventilkörpers 4. So ist das Kupplungsstück 8 ohne Rückschlagventil in einen mit einem Innengewinde 9 versehenen Aufnahmeraum 9 am Kopfende 5 des Ventilkörpers 4 eingeschraubt. Das Kupplungsstück 8 ohne Rückschlagventil dient dem Anschluß an den Motor oder an eine weitere Gasflasche 1. Das Kupplungsstück 10 in dem gegenüberliegenden Aufnahmeraum 11 weist ein Rückschlagventil auf und dient dem Anschluß an eine Tankanlage. Im Bereich der Kupplungsstücke 8,10 befinden sich Öffnungen von Strömungskanälen 12,13,14, die mit dem Hohlraum 15 zur Aufnahme der elektromagnetischen Steuerelemente 25,28,29 und des Absperrkolbens 31 verbunden sind. Ein weiterer Strömungskanal 16 verbindet das elektromagnetische Ventil über einen Durchflußbegrenzer 17 mit dem Innenraum der Gasflasche 1. Ein manuell betätigbares Absperrventil 18 ist in dem Strömungskanal 16 zum Durchflußbegrenzer 17 innerhalb der Gasflasche 1 angeordnet. Durch ein geeignetes Drehwerkzeug kann dieses manuelle Absperrventil 18 verschlossen werden, so daß der Gasfluß zu dem Hohlraum 15 unterbrochen wird. Weitere Strömungskanäle 19 führen aus dem Inneren der Gasflasche 1 zu einem Überdrucksicherungselement in Form einer Berstscheibe 20, die bei einem überhöhten Druck innerhalb der Gasflasche 1 zerbricht. Ebenfalls führt ein Strömungskanal 21 aus dem Inneren der Gasflasche 1 zur thermischen Sicherung 22.

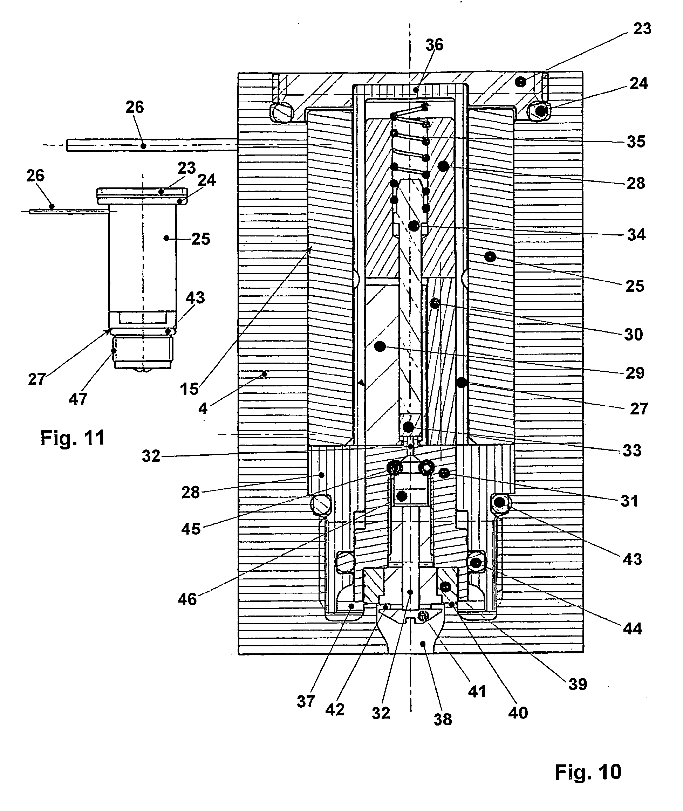

Die Funktionsweise des elektromagnetischen. Ventils wird insbesondere aus der Fig. 10 ersichtlich. In den Hohlraum 15 innerhalb des Ventilkörpers 4 sind die funktionalen Elemente des Ventils eingefügt. Der Hohlraum 15 ist durch einen Schraubdeckel 23 verschlossen, der in ein Innengewinde am oberen Ende des Hohlraums 15 eingeschraubt und über einen Dichtring 24 abgedichtet ist. In dem Hohlraum 15 ist die Spule 25 zur Betätigung des elektrischen Ventils eingefügt. Die Spule 25 ist durch ein Anschlußkabel 26 an einer nicht dargestellte Stromquelle angeschlossen. Innerhalb der Spule 25 verläuft eine Hülse 27, deren unterer Fußabschnitt 28 mit dem unteren Abschnitt des Hohlraums 15 verschraubt ist. Der obere Abschnitt der Hülse 27 ist zylindermantelförmig und umgibt zwei Anker 28,29.

Der erste Anker 28 ist über ein Distanzstück 30 gegenüber einem Absperrkolben 31 abgestützt, der innerhalb der Hülse 27 verschiebbar angeordnet ist. Am oberen Ende befindet sich in der Mitte des Absperrkolbens 31 ein Druckabbaukanal 32, dessen obere Öffnung eine Vorsteueröffnung bildet. Gegen die Vorsteueröffnung liegt eine Vorsteuerdichtung 33 an, die von einem Stößel 34 mittels einer Feder 35, die sich gegen die obere Deckwandung 36 der Hülse 27 abstützt, gegen die Vorsteueröffnung gedrückt wird.

Der in Fig. 10 gezeigte Schließzustand des Ventils herrscht bei nicht angelegtem Strom in der Spule. Wird die Spule mit Strom beaufschlagt, so wird der Anker 29 angehoben und nimmt dabei die Vorsteuerdichtung 33 mit. Hierdurch wird die Strömung durch den Druckabbaukanal 32 freigegeben und die Öffnungsbewegung des Sperrkolbens 31 für die kontrollierte Gasentnahme während des Fahrbetriebs ermöglicht.

Der Ringraum 37, der teilweise von der äußeren Ringfläche des Absperrkolbens 31 und teilweise vom unteren Abschnitt der Hülse 27 begrenzt ist, ist mit dem Inneren der Gasflasche 1 verbunden. Ferner sorgen Spalte und Bohrungen in der Ventilanordnung für eine Verbindung des Ringraums 37 mit dem oberhalb und auf der Rückseite des Absperrkolbens 31 liegenden Raum innerhalb der Hülse 27. Der Anschlußkanal 38 vor dem mittleren Bereich des Kolbens 31 ist über Strömungskanäle mit dem Motor verbunden und weist einen relativ niedrigen Druck auf.

Um die Verbindung zwischen dem Ringraum 37 und dem Anschlußkanal 38 zu öffnen, muß der Kolben 31 angehoben werden. Dadurch wird eine Hauptdichtung 39 an dem Kolben 31 von einem Hauptdichtungssitz 40 im Ventilkörper 4 fortbewegt und ein Strömungsquerschnitt zwischen Hauptdichtung 39 und Hauptdichtungssitz 40 eröffnet. Die Hauptdichtung 39 ist über einen mit dem Kolben 31 verschraubten Dichtungshalter 41 an dem Kolben 31 befestigt. Der Dichtungshalter 41 wird von dem unteren Abschnitt des Druckentlastungskanals 32 durchragt. Nach außen mündet der Druckentlastungskanal 32 am Umfang des Kopfes des Dichtungshalters 41 über zwei Strömungskanäle 42 mit kleinem Querschnitt. Es ist zu erkennen, daß die Strömungskanäle 42 mit kleinem Querschnitt bei geöffnetem Absperrkolben 31 nahe dem kleinsten Querschnitt zwischen dem Ringrum 37 und dem Anschlußkanal 38 liegen. In diesem Bereich ist die Strömungsgeschwindigkeit am höchsten und folglich der statische Druck am niedrigsten. Bei geschlossenem Absperrkolben 31 herrscht in dem Anschlußkanal 38 der niedrige Druck der Zuführleitung zum Motor. Auf der Rückseite des Absperrkolbens 31, d.h. der zu den Ankern 28,29 hin gerichteten Seite des Absperrkolbens 31, baut sich über die erwähnten Spalte der hohe Druck in der Gasflasche 1 und in dem Ringspalt 37 auf. Die Druckdifferenz zwischen diesem hohen Druck und dem niedrigen Druck in dem Anschlußkanal 38 führt dazu, daß der Absperrkolben 31 in seine dargestellte Schließstellung gedrückt wird.

Beim Öffnen des Druckabbaukanals 32 durch Anheben der Vorsteuerdichtung 33 mittels des beweglichen Ankers 29 strömt der hohe Druck von der Rückseite des Absperrkolbens 31 durch den Druckabbaukanal 32 in den Anschlußkanal 38. Durch die engen Spalte und Bohrungen kann aus dem Ringraum 37 nur langsam Gas auf die Rückseite des Absperrkolbens 31 strömen, so daß der Druck hier bei geöffnetem Druckabbaukanal im wesentlichen dem niedrigen Druck in dem Strömungsquerschnitt zwischen Hauptdichtung 39 und Hauptdichtungssitz 40 entspricht. Der Überdruck in dem Ringraum 37, der mit dem Innenraum der Gasflasche 1 kommuniziert, drückt den Absperrkolben 31 in seine obere Öffnungsstellung. Dabei wird der erwähnte Strömungsquerschnitt zwischen der Hauptdichtung 39 und dem Hauptdichtungssitz 40 freigegeben. Durch die Strömungsgeschwindigkeit und -umlenkung wird, wie erwähnt, der Druck im Bereich der Mündungen der Ausströmkanäle 42 zusätzlich reduziert, so daß der Druck auf der Rückseite des Absperrkolbens 31 weiter abfällt. Der Absperrkolben 31 verharrt somit bei geöffnetem Druckabbaukanal 32 in seiner Öffnungsstellung.

Zum Schließen braucht lediglich die Vorsteuerdichtung 33 durch Entregen der Spule 25 wieder mittels der Vorspannfeder 35 gegen die Mündung des Druckabbaukanals 32 gedrückt werden. Der Durchfluß von Gas von der Rückseite des Absperrkolbens 31 zu dessen Vorderseite wird unterbrochen, und es kann sich auf der Rückseite des Kolbens 31 über die erwähnten Spalte der große Druck aus dem Ringraum 37 und dem Innenraum der Gasflasche 1 aufbauen. Die Druckdifferenz gegenüber dem niedrigen Druck im Anschlußkanal 38 treibt den Kolben 31 in seine Schließstellung.

Es sind weitere Dichtungen 43 bis 45 vorgesehen, um unkontrollierte Gasströmungen zu vermeiden. In dem Druckabbaukanal 32 ist ein Filter 46 vorgesehen, der ein Verschmutzen der elektromagnetischen Steuerelemente auf der Rückseite des Absperrkolbens 31 verhindert.

Beim Betanken wird die Anordnung in umgekehrter Richtung durchströmt. Dabei ist die Spule 25 in der Regel entregt, d.h. es liegt kein Strom an, und der Absperrkolben 31 in seiner Schließstellung. Innerhalb der Gasflasche 1 herrscht nur noch ein geringer Überdruck. Von außen wird ein Tankanschluß angebracht, der dem Anschlußkanal 38 Gas mit hohem Druck zuführt. Der hohe Überdruck dieses Gases schiebt den Absperrkolben 31 in seine Offenstellung. Anders als im Stand der Technik wirkt - mit Ausnahme der kleinen Federkraft der Feder 35 zum Schließen der Vorsteuerdichtung 33 - keine mechanische Schließkraft auf den Absperrkolben 31. Dieser wird somit schon bei geringem Überdruck innerhalb des Anschlußkanals 38 in seine Offenstellung gedrückt. In diesem Moment kann Gas aus der Betankungsanlage über den Anschlußkanal 38 durch den Ringraum 37 in die Gasflasche strömen. Da keine erhebliche mechanische Schließkraft dem Öffnen des Absperrkolbens 31 entgegenwirkt, werden instabile-Zustände, in denen eine derartige Schließkraft während des Betankens den Absperrkolben in die Schließstellung bewegt, vermieden. Die Drosselwirkung am Ausströmkanal 42 bewirkt eine hohe Druckdifferenz zwischen dem Anschlußkanal 38 und dem Raum oberhalb der Dichtung 44.

Die Fig. 11 zeigt eine Seitenansicht des Schraubdeckels 23 mit Dichtring 24, Spule 25 sowie dem unteren Abschnitt der Hülse 27 mit weiterem Dichtring 43 und Außengewinde 47.

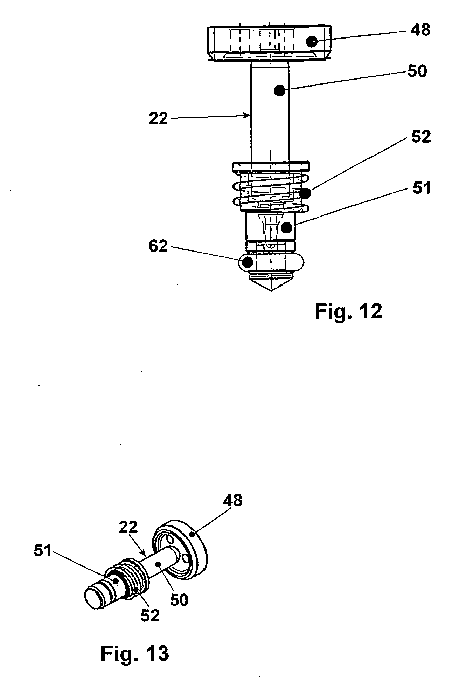

Die Fig. 12 und 13 zeigen die Einzelteile der thermischen Sicherung 22. Diese besteht aus einem Verschlußdeckel 48, der in ein Gewinde in einem Aufnahmeraum 49 des Ventilkörpers 4 (siehe Fig. 7) eingeschraubt wird. Der Verschlußdeckel 48 drückt gegen einen Glaskörper 50. Der Glaskörper 50 hält einen Schließkolben 51 in einer Schließstellung, insbesondere wenn das Gas durch den Vorsteuersitz in den Raum oberhalb des Absperrkolbens gelangt. Wie in Figur 7 erkennbar, befindet sich in der Schließstellung der untere Abschnitt des Schließkolbens 51 in dem Strömungskanal 21 und dichtet diesen über den Dichtring 62 (Figur 12) ab.

Der Glaskörper 50 ist mit einer Flüssigkeit gefüllt und platzt bei Überhitzung. In diesem Moment öffnet der Strömungskanal 21 (siehe Fig. 7), so daß das Gas aus der Gasflasche 1 entweichen kann.

Die Ausströmöffnung 59 der thermischen Sicherung ist in Fig. 5 zu erkennen. Sie liegt wie die Ausströmöffnung 60 des Sicherungselements mit Berstscheibe 20 an dem unteren Teil des Umfangs des Kopfendes 5 des Ventilkörpers. Der Ventilkörper 4 ist mit der Gasflasche 1 unterhalb der Fahrgastzelle (nicht dargestellt) eines Fahrzeuges angebracht, so daß beide Ausströmöffnungen 59, 60 auf der von der Fahrgastzelle abgewandten Seite liegen.

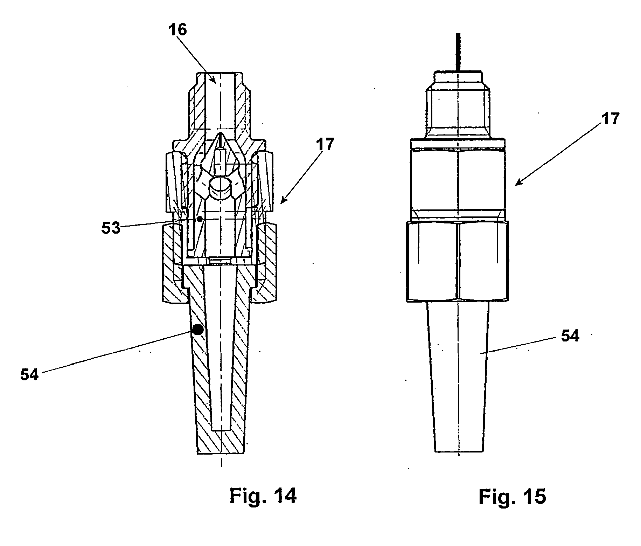

Die Fig. 14 und 15 zeigen einen bekannten Durchflußbegrenzer 17, der an der Mündung des Strömungskanals 16 (vgl. Fig. 8) angebracht ist. Der Durchflußbegrenzer 17 bewirkt mit einem Sperrkörper 53, daß bei einer großen Druckdifferenz zwischen dem Strömungskanal 16 und dem Innenraum der Gasflasche 1 die ausströmende Gasmenge durch den Sperrkörper 53 reduziert wird. Zusätzlich ist ein Filter 54 vorgesehen, der das Einströmen von Verschmutzungen in den Strömungskanal 16 verhindert. Der Filter 54 kann bei einer alternativen Ausführungsform entfallen.

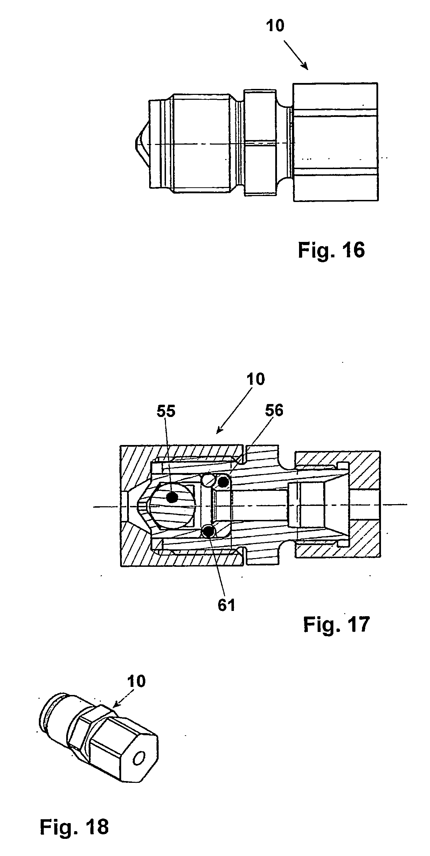

Die Fig. 16 bis 18 zeigen ein Kupplungsstück 10 mit Rückschlagventil. Das Rückschlagventil ist insbesondere in der Schnittdarstellung der Fig. 17 zu erkennen. Es dient der Verbindung des Betankungsanschlusses mit der Gasflasche 1. Das Rückschlagventil hat im wesentlichen zwei wirkende Elemente, nämlich einen kugelförmigen Sperrkörper 55 und einen Sitz 56 für den Sperrkörper 55.

### Bezugszeichenliste:

- 1: Gasflasche
- 2: Innengewinde
- 3: Außengewinde
- 4: Ventilkörper
- 5: Kopfende
- 6: Schutzplatte
- 7: elastische Schicht
- 8: Kupplungsstück ohne Rückschlagventil
- 9: Aufnahmeraum für Kupplungsstück
- 10: Kupplungsstück mit Rückschlagventil
- 11: Aufnahmeraum für Kupplungsstück
- 12: Strömungskanal
- 13: Strömungskanal
- 14: Strömungskanal
- 15: Hohlraum
- 16: Strömungskanal
- 17: Durchflußbegrenzer
- 18: manuelles Absperrventil
- 19: Strömungskanal
- 20: Berstscheibe
- 21: Strömungskanal
- 22: thermische Sicherung
- 23: Schraubdeckel
- 24: Dichtring
- 25: Spule
- 26: Stromkabel
- 27: Hülse
- 28: Anker
- 29: Anker
- 30: Distanzstück
- 31: Absperrkolben
- 32: Druckabbaukanal
- 33: Vorsteuerdichtung
- 34: Stößel
- 35: Feder
- 36: Deckwandung
- 37: Ringraum
- 38: Anschlußkanal
- 39: Hauptdichtung
- 40: Hauptdichtungssitz
- 41: Dichtungshalter
- 42: Ausströmkanal
- 43-45: Dichtungen
- 46: Filter
- 47: Außengewinde
- 48: Verschlußdeckel
- 49: Aufnahmeraum
- 50: Glaskörper
- 51: Schließkolben
- 52: Vorspannfeder
- 53: Sperrkörper
- 54: Filter
- 55: Sperrkörper
- 56: Sitz
- 57: Stützrippe
- 58: Aussparung
- 59: Auströmöffnung der thermischen Sicherung
- 60: Ausströmöffnung des Sicherungselements mit Berstscheibe
- 61: Dichtring
- 62: Dichtring
- 63: Befestigungsschraube

## Patentansprüche

1. Elektromagnetisches Ventil für eine Gasflasche (1), insbesondere eine Gasflasche (1) für gasbetriebene Kraftfahrzeuge, mit
• einem Ventilkörper (4);
• einem Gewindeabschnitt des Ventilkörpers mit einem Außengewinde (3), welches in ein Innengewinde (2) an der Gasflasche (1) einschraubbar ist;
• einem in die Gasflasche (1) hineinragenden Abschnitt des Ventilkörpers (4);
• einem Absperrkolben (31);
• elektromagnetischen Steuerelementen (25, 28, 29), mit denen der Absperrkolben (31) von einer Durchlaßstellung in eine Schließstellung bewegbar ist,
wobei der Ventilkörper (4) zur Aufnahme des Absperrkolbens (31) und der elektromagnetischen Steuerelemente (25, 28 29) einen Hohlraum (15) aufweist, der innerhalb des Gewindeabschnitts und/oder in die Gasflasche (1) hineinragenden Abschnitts des Ventilkörpers (4) angeordnet ist,
und wobei eine Mündung des Hohlraums (15) an dem außerhalb der Gasflasche (1) liegenden Kopfende (5) des Ventilkörpers (4) angeordnet ist und der Absperrkolben (31) und die elektromagnetischen Steuerelemente (25, 28, 29) durch die Mündung in den Hohlraum (15) einfügbar sind,
**dadurch gekennzeichnet, dass** das elektromagnetische Ventil ferner ein manuelles Absperrventil (18) aufweist, welches den Gasfluß zu dem Hohlraum (15) unterbricht.

2. Elektromagnetisches Ventil nach Anspruch 1, **dadurch gekennzeichnet, daß** im Bereich der Mündung des Hohlraums (15) ein Außengewinde (3) angeordnet ist, in das ein Schraubdeckel (23) einschraubbar ist.

3. Elektromagnetisches Ventil nach Anspruch 1 oder 2, **dadurch gekennzeichnet, daß** der Ventilkörper (4) mindestens einen Aufnahmeraum für ein weiteres Element aufweist, wobei das weitere Element durch eine außerhalb der Gasflasche (1) liegende Öffnung in den Aufnahmeraum einfügbar ist.

4. Elektromagnetisches Ventil nach einem der vorangehenden Ansprüche, **dadurch gekennzeichnet, daß** das mindestens eine weitere Element eines der folgenden Elemente ist:
• Anschlußkupplung (8) ohne Rückschlagventil,
• Anschlußkupplung (10) mit Rückschlagventil,
• Sicherungselement mit Berstscheibe (20) zur Sicherung gegen Überdruck,
• Sicherungselement (22) mit fluidgefülltem Glaskörper (50) zur thermischen Sicherung.

5. Elektromagnetisches Ventil nach einem der vorangehenden Ansprüche, **dadurch gekennzeichnet, daß** der Ventilkörper (4) mindestens einen Strömungskanal (12, 13) aufweist, der den Hohlraum (15) mit mindestens einem Kupplungsstück (8, 10) außerhalb der Gasflasche (1) verbindet.

6. Elektromagnetisches Ventil nach einem der vorangehenden Ansprüche, **dadurch gekennzeichnet, daß** der Ventilkörper (4) mindestens einen Strömungskanal (14, 16) umfaßt, der den Hohlraum (15) mit einer Mündung in den Innenraum der Gasflasche (1) verbindet.

7. Elektromagnetisches Ventil nach einem der vorangehenden Ansprüche, **dadurch gekennzeichnet, daß** der Ventilkörper (4) mindestens einen Strömungskanal (16, 19, 21) umfaßt, der den mindestens einen Aufnahmeraum mit einer Mündung in den Innenraum der Gasflasche (1) verbindet.

8. Elektromagnetisches Ventil nach einem der Ansprüche 6 oder 7, **dadurch gekennzeichnet, daß** an der Mündung in den Innenraum der Gasflasche (1) ein Durchflußbegrenzer (17) angeordnet ist.

9. Elektromagnetisches Ventil nach einem der vorangehenden Ansprüche, **dadurch gekennzeichnet, daß** an der Mündung in den Innenraum der Gasflasche (1) ein Filter (54) angeordnet ist.

10. Elektromagnetisches Ventil nach einem der vorangehenden Ansprüche, **dadurch gekennzeichnet, daß** an dem außerhalb der Gasflasche (1) liegenden Kopfende (5) des Ventilkörpers (4) eine Schutzvorrichtung gegen mechanische Einwirkungen angebracht ist.

11. Elektromagnetisches Ventil nach Anspruch 10, **dadurch gekennzeichnet, daß** die Schutzvorrichtung eine Schutzplatte (6) ist.

12. Elektromagnetisches Ventil nach Anspruch 10 oder 11, **dadurch gekennzeichnet, daß** das Kopfende (5) des Ventilkörpers (4) gerundete oder angefaste Kanten aufweist.

13. Elektromagnetisches Ventil nach einem der Ansprüche 10 bis 12, **dadurch gekennzeichnet, daß** die Schutzplatte (6) mindestens eine Stützrippe (57) aufweist.

14. Elektromagnetisches Ventil nach einem der Ansprüche 10 bis 13, **dadurch gekennzeichnet, daß** in der Schutzplatte (6) mindestens eine Aussparung (58) angeordnet ist, die vorzugsweise nahe mindestens einer Stützrippe (57) liegt.

15. Elektromagnetisches Ventil nach einem der Ansprüche 10 bis 14, **dadurch gekennzeichnet, daß** zwischen der Schutzplatte (6) und dem Kopfende (5) des Ventilkörpers (4) eine elastische Schicht (7) angeordnet ist.

16. Elektromagnetisches Ventil nach Anspruch 15, **dadurch gekennzeichnet, daß** die elastische Schicht (7) aus thermoplastischem Kunststoff besteht.

17. Elektromagnetisches Ventil nach einem der vorangehenden Ansprüche, **dadurch gekennzeichnet, daß** das Kopfende (5) des Ventilkörpers (4) als Mehrkant, insbesondere Vierkant oder Sechskant, ausgebildet ist.

18. Elektromagnetisches Ventil nach einem der Ansprüche 4 bis 17 , **dadurch gekennzeichnet, daß** die Gasflasche (1) an einem Kraftfahrzeug mit Fahrgastzelle anbringbar ist, daß das Ventil mehrere Sicherungselemente (18, 20, 22) umfaßt, die eine außerhalb der Gasflasche (1) liegende Ausströmöffnung (59) aufweisen, wobei alle Ausströmöffnungen auf einer von der Fahrgastzelle abgewandten Seite an dem Ventilkörper (4) angeordnet sind.

## Claims

1. Electromagnetic valve for a gas cylinder (1), in particular a gas cylinder (1) for gas-powered motor vehicles, having
• a valve body (4);
• a threaded portion of the valve body with an external thread (3), which is screwable into an internal thread (2) on the gas cylinder (1);
• a portion of the valve body (4) projecting into the gas cylinder (1);
• a shut-off piston (31);
• electromagnetic control elements (25, 28, 29), by which the shut-off piston (31) is movable from an open position to a closed position,
wherein the valve body (4) for receiving the shut-off piston (31) and the electromagnetic control elements (25, 28, 29) has a cavity (15), which is disposed inside the threaded portion and/or the portion of the valve body (4) projecting into the gas cylinder (1),
and wherein a mouth of the cavity (15) is disposed on the head end (5) of the valve body (4) situated outside of the gas cylinder (1), and the shut-off piston (31) and the electromagnetic control elements (25, 28, 29) can be inserted into the cavity (15) through the mouth,
**characterized in that** the electromagnetic valve further comprises a manual shut-off valve (18), which interrupts the gas flow to the cavity (15).

2. Electromagnetic valve according to claim 1, **characterized in that** disposed in the region of the mouth of the cavity (15) is an external thread (3), into which a screw cap (23) is screwable.

3. Electromagnetic valve according to claim 1 or 2, **characterized in that** the valve body (4) has at least one further receiving space for a further element, wherein the further element can be inserted into the receiving space through an opening situated outside of the gas cylinder (1).

4. Electromagnetic valve according to one of the preceding claims, **characterized in that** the at least one further element is one of the following elements:
• a connection coupling (8) without a non-return valve,
• a connection coupling (10) with a non-return valve,
• a safety element with rupture diaphragm (20) for protecting against excessively high pressure,
• a safety element (22) with a fluid-filled glass body (50) for thermal protection.

5. Electromagnetic valve according to one of the preceding claims, **characterized in that** the valve body (4) has at least one flow channel (12, 13) connecting the cavity (15) to at least one coupling piece (8, 10) outside of the gas cylinder (1).

6. Electromagnetic valve according to one of the preceding claims, **characterized in that** the valve body (4) comprises at least one flow channel (14, 16) connecting the cavity (15) to a mouth into the interior of the gas cylinder (1).

7. Electromagnetic valve according to one of the preceding claims, **characterized in that** the valve body (4) comprises at least one flow channel (16, 19, 21) connecting the at least one receiving space to a mouth into the interior of the gas cylinder (1).

8. Electromagnetic valve according to one of claims 6 or 7, **characterized in that** a flow restrictor (17) is disposed on the mouth into the interior of the gas cylinder (1).

9. Electromagnetic valve according to one of the preceding claims, **characterized in that** a filter (54) is disposed on the mouth into the interior of the gas cylinder (1).

10. Electromagnetic valve according to one of the preceding claims, **characterized in that** a protective device against mechanical actions is provided on the head end (5) of the valve body (4) situated outside of the gas cylinder (1).

11. Electromagnetic valve according to claim 10, **characterized in that** the protective device is a protective plate (6).

12. Electromagnetic valve according to claim 10 or 11, **characterized in that** the head end (5) of the valve body (4) has rounded or chamfered edges.

13. Electromagnetic valve according to one of claims 10 to 12, **characterized in that** the protective plate (6) has at least one support rib (57).

14. Electromagnetic valve according to one of claims 10 to 13, **characterized in that** disposed in the protective plate (6) is at least one cutout (58), which is preferably situated close to at least one support rib (57).

15. Electromagnetic valve according to one of claims 10 to 14, **characterized in that** an elastic layer (7) is disposed between the protective plate (6) and the head end (5) of the valve body (4).

16. Electromagnetic valve according to claim 15, **characterized in that** the elastic layer (7) is made of a thermoplastic polymer.

17. Electromagnetic valve according to one of the preceding claims, **characterized in that** the head end (5) of the valve body (4) is designed as a polygon, in particular a quadrilateral or hexagon.

18. Electromagnetic valve according to one of claims 4 to 17, **characterized in that** the gas cylinder (1) can be attached to a motor vehicle with a passenger compartment, that the valve comprises a plurality of safety elements (18, 20, 22), which have an efflux opening (59) situated outside of the gas cylinder (1), wherein all of the efflux openings are disposed on the valve body (4) at a side remote from the passenger compartment.

## Revendications

1. Soupape électromagnétique pour une bouteille de gaz (1), en particulier une bouteille de gaz (1) pour un véhicule fonctionnant au gaz, comprenant :
• un corps de soupape (4) ;
• une section filetée du corps de soupape, avec un filetage extérieur (3) qui peut être vissé dans un filetage intérieur (2) au niveau de la bouteille de gaz (1) ;
• une section, faisant saillie dans la bouteille de gaz (1), du corps de soupape (4) ;
• un piston d'obturation (31) ;
• des éléments de commande (25, 28, 29) électromagnétiques, avec lesquels le piston d'obturation (31) peut être déplacé d'une position de débit à une position de fermeture,
le corps de soupape (4) présentant une cavité (15), destinée à recevoir le piston d'obturation (31) et les éléments de commande (25, 28, 29) électromagnétiques, qui est agencée à l'intérieur de la section filetée et/ou dans la section, faisant saillie dans la bouteille de gaz (1), du corps de soupape (4), et une embouchure de la cavité (15) étant agencée au niveau de l'extrémité de tête (5), située à l'extérieur de la bouteille de gaz (1), du corps de soupape (4) et le piston d'obturation (31) et les éléments de commande (25, 28, 29) électromagnétiques pouvant être insérés à travers l'embouchure de la cavité (15),
**caractérisée en ce que** la soupape électromagnétique présente en outre une soupape d'obturation manuelle (18), qui interrompt le flux de gaz vers la cavité (15).

2. Soupape électromagnétique selon la revendication 1, **caractérisée en ce qu'**un filetage extérieur (3) dans lequel un couvercle fileté (23) peut être vissé, est agencé dans le secteur de l'embouchure de la cavité (15).

3. Soupape électromagnétique selon la revendication 1 ou 2, **caractérisée en ce que** le corps de soupape (4) présente au moins un espace de réception pour un autre élément, l'autre élément pouvant être inséré dans l'espace de réception à travers une ouverture située à l'extérieur de la bouteille de gaz (1).

4. Soupape électromagnétique selon l'une quelconque des revendications précédentes, **caractérisée en ce que** le au moins un autre élément est un des éléments suivants :
• couplage de jonction (8) sans clapet antiretour,
• couplage de jonction (10) avec clapet antiretour,
• élément de sécurité avec disque de rupture (20), en vue d'une protection contre la surpression,
• élément de sécurité (22) comprenant un corps en verre (50) rempli de liquide, en vue d'une protection thermique.

5. Soupape électromagnétique selon l'une quelconque des revendications précédentes, **caractérisée en ce que** le corps de soupape (4) présente au moins un canal d'écoulement (12, 13), qui relie la cavité (15) avec au moins une pièce de couplage (8, 10) à l'extérieur de la bouteille de gaz (1).

6. Soupape électromagnétique selon l'une quelconque des revendications précédentes, **caractérisée en ce que** le corps de soupape (4) comporte au moins un canal d'écoulement (14, 16), qui relie la cavité (15) avec une embouchure située dans l'espace intérieur de la bouteille de gaz (1).

7. Soupape électromagnétique selon l'une quelconque des revendications, **caractérisée en ce que** le corps de soupape (4) comporte au moins un canal d'écoulement (16, 19, 21), qui relie le au moins un espace de réception avec une embouchure située dans l'espace intérieur de la bouteille de gaz (1).

8. Soupape électromagnétique selon l'une quelconque des revendications 6 ou 7, **caractérisée en ce qu'**un limiteur de débit (17) est agencé au niveau de l'embouchure située dans l'espace intérieur de la bouteille de gaz (1).

9. Soupape électromagnétique selon l'une quelconque des revendications précédentes, **caractérisée en ce qu'**un filtre (54) est agencé au niveau de l'embouchure située dans l'espace intérieur de la bouteille de gaz (1).

10. Soupape électromagnétique selon l'une quelconque des revendications précédentes, **caractérisée en ce qu'**un dispositif de protection contre les actions mécaniques est installé au niveau de l'extrémité de tête (5), située à l'extérieur de la bouteille de gaz (1), du corps de soupape (4).

11. Soupape électromagnétique selon la revendication 10, **caractérisée en ce que** le dispositif de protection est une plaque protectrice (6).

12. Soupape électromagnétique selon la revendication 10 ou 11, **caractérisée en ce que** l'extrémité de tête (5) du corps de soupape (4) présente des bords arrondis ou biseautés.

13. Soupape électromagnétique selon l'une quelconque des revendications 10 à 12, **caractérisée en ce que** la plaque protectrice (6) présente au moins une nervure d'appui (57).

14. Soupape électromagnétique selon l'une quelconque des revendications 10 à 13, **caractérisée en ce que** dans la plaque protectrice (6) est agencé au moins un évidement (58), qui se situe de préférence à proximité d'au moins une nervure d'appui (57).

15. Soupape électromagnétique selon l'une quelconque des revendications 10 à 14, **caractérisée en ce qu'**une couche élastique (7) est agencée entre la plaque protectrice (6) et l'extrémité de tête (5) du corps de soupape (4).

16. Soupape électromagnétique selon la revendication 15, **caractérisée en ce que** la couche élastique (7) est constituée de matière plastique thermoplastique.

17. Soupape électromagnétique selon l'une quelconque des revendications précédentes, **caractérisée en ce que** l'extrémité frontale (5) du corps de soupape (4) est réalisée sous forme d'un polygone, en particulier d'un carré ou d'un hexagone.

18. Soupape électromagnétique selon l'une quelconque des revendications 4 à 17, **caractérisée en ce que** la bouteille de gaz (1) peut être placée sur un véhicule comprenant un habitacle, que la soupape comporte plusieurs éléments de sécurité (18, 20, 22) qui présentent respectivement un orifice d'évacuation (59) situé à l'extérieur de la bouteille de gaz (1), tous les orifices d'évacuation étant agencés au niveau du corps de soupape (4) sur un côté opposé à l'habitacle.
